(19) Europäisches Patentamt
European Patent Office
Office européen des brevets

(11) EP 4 715 937 A1

(12) **EUROPEAN PATENT APPLICATION**
published in accordance with Art. 153(4) EPC

(43) Date of publication:
**25.03.2026 Bulletin 2026/13**

(21) Application number: **23940320.7**

(22) Date of filing: **29.08.2023**

(51) International Patent Classification (IPC):
***H01M 10/0567*** *(2010.01)* ***H01M 10/0525*** *(2010.01)*

(52) Cooperative Patent Classification (CPC):
**H01M 4/525; H01M 4/505; H01M 10/0567; H01M 10/0568;** H01M 10/0525; H01M 2004/021; H01M 2300/0025; Y02E 60/10

(86) International application number:
**PCT/CN2023/115463**

(87) International publication number:
**WO 2024/250441 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.06.2023 CN 202310668810**

(71) Applicant: **Contemporary Amperex Technology Co., Limited**
**Ningde, Fujian 352100 (CN)**

(72) Inventors:
- **ZHANG, Cuiping**
**Ningde, Fujian 352100 (CN)**
- **HAN, Changlong**
**Ningde, Fujian 352100 (CN)**
- **WU, Zeli**
**Ningde, Fujian 352100 (CN)**
- **FAN, Peng**
**Ningde, Fujian 352100 (CN)**
- **HUANG, Lei**
**Ningde, Fujian 352100 (CN)**
- **GUO, Jie**
**Ningde, Fujian 352100 (CN)**
- **JIANG, Bin**
**Ningde, Fujian 352100 (CN)**

(74) Representative: **Gong, Jinping**
**CocreateIP**
**Neumarkter Straße 21**
**81673 München (DE)**

(54) **ELECTROLYTE, BATTERY AND ELECTRICAL APPARATUS**

(57) The present application discloses an electrolyte solution, a battery and an electrical device. The electrolyte solution includes a first additive, a second additive and a third additive. The first additive includes a sulfate ester compound. The second additive includes:

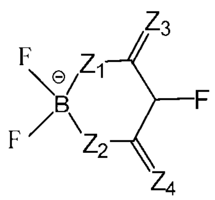

formula (I)

, where $Z_1$-$Z_4$ each independently include an oxygen atom or a sulfur atom. The third additive includes at least one of fluorosulfonate, tetrafluoroborate, difluorophosphate, difluoro(oxalato)borate, bis(oxalato)borate and difluorobis(oxalato)phosphate. Based on the total mass of the electrolyte solution, content $W_1$ of the first additive, content $W_2$ of the second additive and content $W_3$ of the third additive satisfy $W_1$:$W_2$:$W_3$=1:(0.1-1.5):(0.02-2.5).

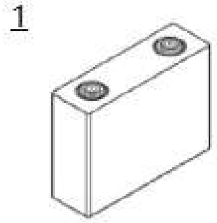


FIG. 1

EP 4 715 937 A1

## Description

## TECHNICAL FIELD

The present application belongs to the field of batteries, and in particular relates to an electrolyte solution, a battery and an electrical device.

## BACKGROUND

Lithium-ion batteries are widely used in various consumer electronic products and electric vehicles due to their outstanding characteristics such as a light weight, no pollution, and no memory effect. However, as lithium-ion batteries cycle, side reactions occur in the electrolyte solution at positive and negative electrode interfaces, resulting in relatively poor power performance, cycling performance, and high-temperature storage performance of the batteries.

## SUMMARY

In view of the technical problems existing in the BACKGROUND, the present application provides an electrolyte solution, which aims to improve the performance of a secondary battery containing same, such as power performance, cycling performance and high-temperature storage performance.

In order to achieve the above-mentioned object, in one aspect, the present application provides an electrolyte solution where the electrolyte solution includes a first additive, a second additive and a third additive, and the first additive includes a sulfate ester compound;

the second additive includes:

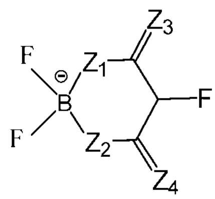
,

where $Z_1$-$Z_4$, each independently include an oxygen atom or a sulfur atom;
the third additive includes at least one of fluorosulfonate, tetrafluoroborate, difluorophosphate, difluoro(oxalato)borate, bis(oxalato)borate and difluorobis(oxalato)phosphate; and
based on the total mass of the electrolyte solution, content $W_1$ of the first additive, content $W_2$ of the second additive and content $W_3$ of the third additive satisfy $W_1$:$W_2$:$W_3$=1:(0.1-1.5):(0.02-2.5).

The present application at least includes the following beneficial effects: the electrolyte solution having a composition of the present application can improve the power performance, the cycling performance and the high-temperature storage performance of the battery.

In some embodiments, $W_1$:$W_2$:$W_3$=1:(0.2-1.2):(0.05-2.3). Thereby, the power performance, the cycling performance and the high-temperature storage performance of the battery can be improved.

In some embodiments, $W_1$:$W_2$:$W_3$=1:(0.2-1):(0.1-2). Thereby, the power performance, the cycling performance and the high-temperature storage performance of the battery can be improved.

In some embodiments, the content $W_1$ of the first additive satisfies: 0.05%≤$W_1$≤2%. Therefore, in the electrolyte solution of the present application, the first additive at this content is used, which can participate in film formation at the negative electrode interface, effectively inhibit the reduction and decomposition of the electrolyte solution at the negative electrode, and improve the cycling performance and high-temperature storage performance of the battery.

In some embodiments, the content $W_1$ of the first additive satisfies: 0.05%≤$W_1$≤1.5%. Thereby, the cycling performance and high-temperature storage performance of the battery can be effectively improved.

In some embodiments, the content $W_1$ of the first additive satisfies: 0.1%≤$W_1$≤1%. Thereby, the cycling performance and high-temperature storage performance of the battery can be effectively improved.

In some embodiments, the content $W_2$ of the second additive satisfies: 0.05%≤$W_2$≤3%. Therefore, in the electrolyte solution of the present application, the second additive at this content is used, which can participate in film formation at the positive electrode interface, effectively inhibit the oxidation of the electrolyte solution at the positive electrode, and improve the cycling performance and high-temperature storage performance of the battery.

In some embodiments, the content $W_2$ of the second additive satisfies: $0.1\% \leq W_2 \leq 2\%$. Thereby, the power performance, cycling performance and high-temperature storage performance of the battery can be effectively improved.

In some embodiments, the content $W_2$ of the second additive satisfies: $0.1\% \leq W_2 \leq 1\%$. Thereby, the power performance, cycling performance and high-temperature storage performance of the battery can be effectively improved.

In some embodiments, the content $W_3$ of the third additive satisfies: $0.01\% \leq W_3 \leq 5\%$. Therefore, in the electrolyte solution of the present application, the third additive at this content is used, which can assist the second additive in film formation, and improve the cycling performance and high-temperature storage performance of the battery, and will not deteriorate the ionic conductivity of the electrolyte solution, thereby improving the power performance of the battery.

In some embodiments, the content $W_3$ of the third additive satisfies: $0.05\% \leq W_3 \leq 3\%$. Thereby, the power performance, cycling performance and high-temperature storage performance of the battery can be effectively improved.

In some embodiments, the content $W_3$ of the third additive satisfies: $0.1\% \leq W_3 \leq 2\%$. Thereby, the power performance, cycling performance and high-temperature storage performance of the battery can be effectively improved.

In some embodiments, the first additive includes at least one of

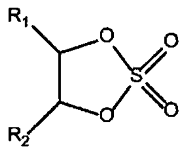

and

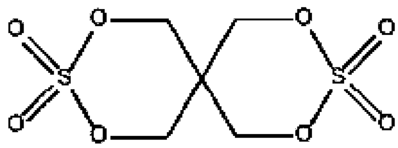

,

where $R_1$, and $R_2$ each independently include a hydrogen atom, $C_1$-$C_6$ alkyl,

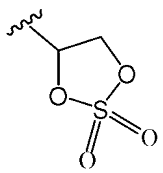

,

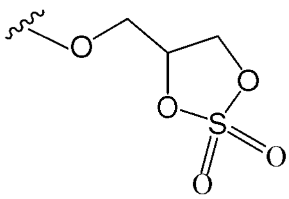

or

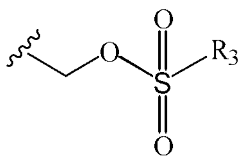

,

and $R_3$ includes $C_1$-$C_6$ alkyl. Therefore, the first additive having such a composition can participate in film formation at the negative electrode interface, effectively inhibit the reduction and decomposition of the electrolyte solution at the negative electrode, and improve the cycling performance and high-temperature storage performance of the battery.

In some embodiments, the first additive includes at least one of the following structural formulas:

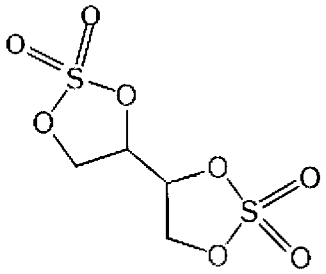
Formula 1-1 ,
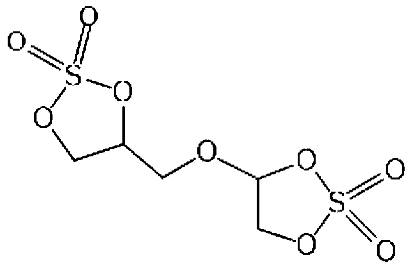
Formula 1-2 ,

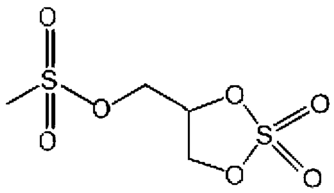
Formula 1-3 ,
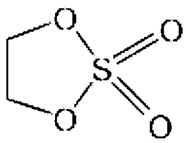
Formula 1-4 ,
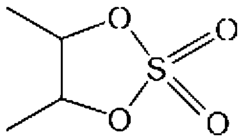
Formula 1-5 ,

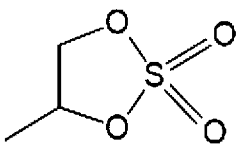
Formula 1-6 ,
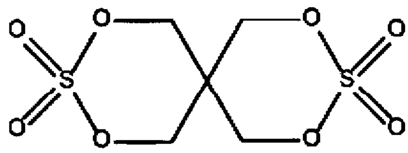
Formula 1-7 ,

and

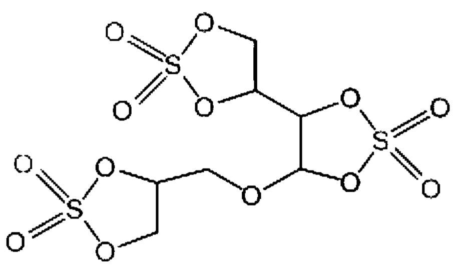
Formula 1-8 .

Therefore, the first additive having such a composition can participate in film formation at the negative electrode interface, effectively inhibit the reduction and decomposition of the electrolyte solution at the negative electrode, and improve the cycling performance and high-temperature storage performance of the battery.

In some embodiments, the second additive includes at least one of the following:

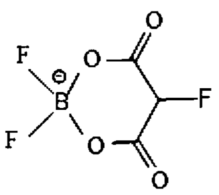
Formula 2-1 ,
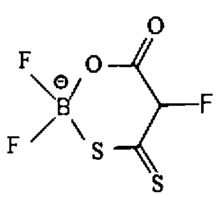
Formula 2-2 ,
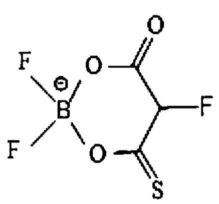
Formula 2-3 , and
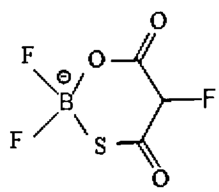
Formula 2-4 .

Therefore, the second additive having such a composition can participate in film formation at the positive electrode interface, effectively inhibit the oxidation of the electrolyte solution at the positive electrode, and improve the

cycling performance and high-temperature storage performance of the battery.

In a second aspect, the present application provides a battery, including the electrolyte solution of the first aspect. As a result, the battery has excellent power performance, cycling performance and high-temperature storage performance.

In some embodiments, the battery includes a positive electrode plate, where the positive electrode active material in the positive electrode plate includes:

$$Li_xNi_aCo_bMn_cM_dO_{2-e},$$

M includes at least one of aluminum, zirconium, boron, magnesium, zinc, calcium and titanium, $0.65 \leq a \leq 0.98$, $0 \leq b \leq 0.3$, $0.02 \leq c \leq 0.3$, $0 \leq d \leq 0.3$, $a+b+c+d=1$, $0.1 \leq x \leq 1.3$, and $0 \leq e \leq 1.9$.

In some embodiments, x, a, b, c, d and e satisfy at least one of the following: $0.7 \leq a \leq 0.92$; $0 \leq b \leq 0.2$; $0.02 \leq c \leq 0.2$; $0.0001 \leq d \leq 0.1$; $0.2 \leq x \leq 1.2$; and $0.1 \leq e \leq 1$.

In some embodiments, the compaction density of the positive electrode plate is 3.1 g/cm$^3$-3.7 g/cm$^3$. As a result, this can promote the positive electrode active material to exert its gram capacity and improve the capacity retention rate of the battery containing same.

In some embodiments, the compaction density of the positive electrode plate is 3.2 g/cm$^3$-3.6 g/cm$^3$. As a result, this can promote the positive electrode active material to exert its gram capacity and improve the capacity retention rate of the battery containing same.

In some embodiments, the battery includes a negative electrode plate, and the compaction density of the negative electrode plate is 1.3 g/cm$^3$-1.7 g/cm$^3$.

In some embodiments, the compaction density of the negative electrode plate is 1.4 g/cm$^3$-1.6 g/cm$^3$.

In a third aspect, the present application provides an electrical device, including the battery of the second aspect.

Some of the additional aspects and advantages of the present application will be set forth in the following description, and some will become apparent from the following description, or be learned by practice of the present application.

## BRIEF DESCRIPTION OF THE DRAWINGS

Various other advantages and benefits will become apparent to those of ordinary skills in the art upon reading the following detailed description of the preferred embodiments. The accompanying drawings are merely used for illustrating the preferred embodiments and are not intended to constitute a limitation on the present application. Moreover, same components are denoted by same reference signs throughout the accompanying drawings. In the accompanying drawings:

FIG. 1 is a schematic structural diagram of a battery according to an embodiment of the present application;
FIG. 2 is a schematic structural diagram of a battery module according to an embodiment of the present application;
FIG. 3 is a schematic structural diagram of a battery pack according to an embodiment of the present application;
FIG. 4 is an exploded view of FIG. 3; and
FIG. 5 is a schematic diagram of an embodiment of an electrical apparatus using a battery as a power source.

Description of reference numerals:

1: Secondary battery; 2: Battery module; 3: Battery pack; 4: Upper box; 5: Lower box.

## DETAILED DESCRIPTION

Embodiments of the technical solutions of the present application will be described in detail below. The following embodiments are only used to illustrate the technical solutions of the present application more explicitly, and are thus only interpreted as examples, rather than used to limit the protection scope of the present application.

Reference herein to "an embodiment" means that a particular feature, structure, or characteristic described in connection with the embodiment can be included in at least one embodiment of the present application. The phrase at various locations in the description does not necessarily refer to the same embodiment, or an independent or alternative embodiment exclusive of another embodiment. A person skilled in the art explicitly or implicitly understands that the embodiments described in the specification may be combined with other embodiments.

For brevity, only some numerical ranges are specifically disclosed herein. However, any lower limit can be combined with any upper limit to form a range that is not explicitly specified; and any lower limit can be combined with other lower limits to form an unspecified range, and likewise any upper limit can be combined with any other upper limit to form an

unspecified range. In addition, each separately disclosed point or single numerical value may be used as a lower limit or an upper limit to combine with any other point or other single numerical value or with any other lower or upper limit to form a range that is not clearly recorded.

In the description of the present application, the term "and/or" is merely an association to describe the associated objects. It can mean that there are three types of relationships, such as A and/or B, which means that A exists alone, A and B exist at the same time, and B exists alone. In addition, the character "/" in this specification generally indicates an "or" relationship between the associated objects.

Unless otherwise defined, all technical and scientific terms used herein have the same meaning as commonly understood by those skilled in the technical field to which the present application belongs. The terminology used herein is for the purpose of describing particular embodiments only and is not intended to limit the present application. The terms "comprising" and "having" and any variations thereof in the description and claims of the present application and the above description of the accompanying drawings are intended to cover non-exclusive inclusions.

At present, from the perspective of the development of the market situation, lithium-ion batteries are not only used in energy storage power systems such as hydraulic power, thermal power, wind power and solar power stations, but also widely used in electric vehicles such as electric bicycles, electric motorcycles and electric vehicles, military equipment, aerospace and other fields. With the continuous expansion of the application field of lithium-ion batteries, the market demand for the lithium-ion batteries is also expanding.

The electrolyte solution of lithium-ion batteries includes lithium salts and organic solvents. The battery is charged for the first time after being filled with electrolyte solution. As charging progresses, the negative electrode potential gradually decreases. At the same time, the active lithium in the positive electrode gradually releases and migrates to the negative electrode. The organic solvent and lithium salt in the electrolyte solution undergo a reduction reaction, and the active lithium also participates in the reaction, forming a negative electrode solid electrolyte solution interface (SEI film) on the negative electrode surface. The SEI film is unstable and may rupture during the subsequent cycles, exposing a fresh negative electrode interface. The electrolyte solution and active lithium react again at the negative electrode interface to form a new SEI film. The formed SEI film is relatively thick and has a large impedance, resulting in poor battery power performance. At the same time, each time of formation of the SEI film consumes active lithium, which causes the cycling performance and high-temperature storage performance of the battery to deteriorate.

In the present application, a first additive, a second additive and a third additive are added to the electrolyte solution, and content $W_1$ of the first additive, content $W_2$ of the second additive and content $W_3$ of the third additive satisfy $W_1$:$W_2$:$W_3$=1: (0.1-1.5): (0.02-2.5), the first additive includes a sulfate ester group with a high reduction potential. The group can accept electrons from the negative electrode surface during the battery charging with a preferential self-reduction reaction. The reduction product is deposited at the negative electrode interface and participates in the formation of the SEI film. The SEI film has high stability and can effectively inhibit the reduction and decomposition of the electrolyte solution at the negative electrode, and will not continuously consume the active lithium of the positive electrode, thereby improving the battery cycling performance and high-temperature storage life. The second additive can decompose at the positive electrode interface, and the decomposition product is rich in carboxylate. The carboxylate produced by the second additive in the above ratio combines with the cations in the electrolyte solution and is deposited at the positive electrode interface to participate in the formation of the positive electrode solid electrolyte interface (CEI film), thereby inhibiting the oxidation reaction of the first additive on the positive electrode side to produce a gas, and improving the high-temperature storage performance of the battery. The third additive in the above ratio decomposes to produce small molecules, which can be deposited on the positive electrode solid electrolyte interface to make up for the loose and dispersed positive electrode solid electrolyte interface formed by the second additive on the positive electrode surface, thereby obtaining a denser positive electrode solid electrolyte interface and improving the high-temperature storage performance of the battery. In addition, the SEI film and CEI film formed by the additives in the above ratios are both relatively stable and thin, with a low impedance, thereby improving the power performance of the battery. Therefore, in the present application the first additive, the second additive and the third additive in the above ratios are added to the electrolyte solution, which can effectively improve the power performance, cycling performance and high-temperature storage performance of the battery.

The battery disclosed in the embodiments of the present application can be used in electrical devices that use the battery as a power source or in various energy storage systems that use the battery as an energy storage element. The electrical device may be, but is not limited to, a mobile phone, a tablet, a notebook computer, an electric toy, an electric tool, a battery cart, an electric vehicle, a ship, a spacecraft, etc. The electric toy may include a stationary or mobile electric toy, such as a game console, an electric vehicle toy, an electric ship toy and an electric airplane toy. The spacecraft may include an airplane, a rocket, a space shuttle, a spaceship, etc.

In a first aspect of the present application, the present application provides an electrolyte solution, where the electrolyte solution includes a first additive, a second additive and a third additive, and the first additive includes a sulfate ester compound;

the second additive includes:

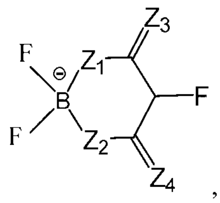,

where $Z_1$-$Z_4$, each independently include an oxygen atom or a sulfur atom;
the third additive includes at least one of fluorosulfonate, tetrafluoroborate, difluorophosphate, difluoro(oxalato) borate, bis(oxalato)borate and difluorobis(oxalato)phosphate;
based on the total mass of the electrolyte solution, the content $W_1$ of the first additive, the content $W_2$ of the second additive and the content $W_3$ of the third additive satisfy $W_1$:$W_2$:$W_3$=1:(0.1-1.5):(0.02-2.5).

The "sulfate ester compound" of the present application refers to a compound containing a sulfate ester group ($-O-SO_2-O-$) in the structure.

Without wishing to be limited to any theory, a first additive, a second additive and a third additive are added to the electrolyte solution, and the content $W_1$ of the first additive, the content $W_2$ of the second additive and the content $W_3$ of the third additive satisfy $W_1$:$W_2$:$W_3$=1: (0.1-1.5): (0.02-2.5), the first additive includes a sulfate ester group with a high reduction potential. The group can accept electrons from the negative electrode surface during the battery charging with a preferential self-reduction reaction. The reduction product is deposited at the negative electrode interface and participates in the formation of the negative electrode solid electrolyte interface (SEI film). The SEI film has high stability and can effectively inhibit the reduction and decomposition of the electrolyte solution at the negative electrode, and will not continuously consume the active lithium of the positive electrode, thereby improving the battery cycling performance and high-temperature storage life. The second additive can decompose at the positive electrode interface, and the decomposition product is rich in carboxylate. The carboxylate produced by the second additive in the above ratio combines with the cations in the electrolyte solution and is deposited at the positive electrode interface to participate in the formation of the positive electrode solid electrolyte interface (CEI film), thereby inhibiting the oxidation reaction of the first additive on the positive electrode side to produce a gas, and improving the high-temperature storage performance of the battery. Furthermore, the second additive in the above content can improve the ionic conductivity of the electrolyte solution and increase the power performance of the battery. The third additive in the above ratio decomposes to produce small molecules, which can be deposited on the positive electrode solid electrolyte interface to make up for the loose and dispersed positive electrode solid electrolyte interface formed by the second additive on the positive electrode surface, thereby obtaining a denser positive electrode solid electrolyte interface and improving the high-temperature storage performance of the battery. In addition, the SEI film and CEI film formed by the additives in the above ratios are both relatively stable and relatively thin, with a low impedance, thereby improving the power performance of the battery. Therefore, in the present application the first additive, the second additive and the third additive in the above ratios are added to the electrolyte solution, which can effectively improve the power performance, cycling performance and high-temperature storage performance of the battery.

In some embodiments of the present application, based on the total mass of the electrolyte solution, the content $W_1$ of the first additive, the content $W_2$ of the second additive and the content $W_3$ of the third additive satisfy $W_1$:$W_2$:$W_3$=1:(0.1-1.5):(0.02-2.5), for example, 1:(0.2-1.4):(0.02-2.5), 1:(0.3-1.3):(0.02-2.5), 1:(0.4-1.2):(0.02-2.5), 1:(0.5-1.1):(0.02-2.5), 1:(0.6-1):(0.02-2.5), 1:(0.7-0.9):(0.02-2.5), 1:(0.8-0.9):(0.02-2.5), 1:(0.2-1.4):(0.04-2.4), 1:(0.2-1.4):(0.05-2.3), 1:(0.2-1.4):(0.07-2.2), 1:(0.2-1.4):(0.08-2.1), 1:(0.2-1.4):(0.09-2), 1:(0.2-1.4):(0.1-1.8), 1:(0.2-1.4):(0.2-1.6), 1:(0.2-1.4):(0.5-1.5), 1:(0.2-1.4):(0.8-1.3), 1:(0.2-1.4):(0.9-1.2), 1:(0.2-1.4):(1-1.2), 1:(0.2-1.4):(1-1.1), etc. In some other embodiments of the present application, based on the total mass of the electrolyte solution, the content $W_1$ of the first additive, the content $W_2$ of the second additive and the content $W_3$ of the third additive satisfy $W_1$:$W_2$:$W_3$=1:(0.2-1.2):(0.05-2.3), for example 1:(0.2-1):(0.1-2).

Therefore, by adding the first additive, the second additive and the third additive in the above-mentioned ratio range of the present application into the electrolyte solution, the first additive can participate in the formation of the negative electrode solid electrolyte interface (SEI film), and the SEI film has high stability, and can effectively inhibit the reduction and decomposition of the electrolyte solution at the negative electrode, and will not continuously consume the active lithium of the positive electrode, thereby improving the battery cycling performance and high-temperature storage life. The carboxylate produced by the second additive in the above ratio combines with the cations in the electrolyte solution and is deposited at the positive electrode interface to participate in the formation of the positive electrode solid electrolyte interface (CEI film), thereby inhibiting the oxidation reaction of the first additive on the positive electrode side to produce a

gas, and improving the high-temperature storage performance of the battery. Furthermore, the second additive in the above ratio can improve the ionic conductivity of the electrolyte solution and enhance the power performance of the battery. The small molecules produced by the decomposition of the third additive in the above proportion can be deposited on the positive electrode solid electrolyte interface to make up for the loose and dispersed positive electrode solid electrolyte interface formed by the second additive on the positive electrode surface, thereby obtaining a denser positive electrode solid electrolyte interface and improving the high-temperature storage performance of the battery. In addition, the SEI film and CEI film formed by the additives in the above ratios are both relatively stable and relatively thin, with a low impedance, thereby improving the power performance of the battery. In summary, in the present application the first additive, the second additive and the third additive in the above ratios are added to the electrolyte solution, which can effectively improve the power performance, cycling performance and high-temperature storage performance of the battery.

It should be noted that the test method for the content $W_1$ of the first additive, the content $W_2$ of the second additive and the content $W_3$ of the third added in the present application can be measured by instruments and methods known in the art, for example, the test method includes: for the content $W_1$ of the first additive, gas chromatography quantitative analysis, which refers to GB/T 9722-2006; and for the content $W_2$ of the second additive and the content $W_3$ of the third additive, ion chromatography method, which refers to JY/T 020-1996, GB/T 6040-2002.

In some embodiments of the present application, the first additive may include a sulfate ester compound. The sulfate ester compound contains a sulfate ester group with a high reduction potential. The group can accept electrons from the negative electrode surface during the battery charging with a preferential self-reduction reaction. The reduction product is deposited at the negative electrode interface and participates in the formation of the negative electrode solid electrolyte interface (SEI film). The SEI film has high stability and effectively inhibit the reduction and decomposition of the electrolyte solution at the negative electrode, and will not continuously consume the active lithium of the positive electrode, thereby improving the battery cycling performance and high-temperature storage life. In some specific embodiments of the present application, the first additive may include at least one of

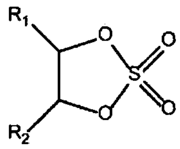 and 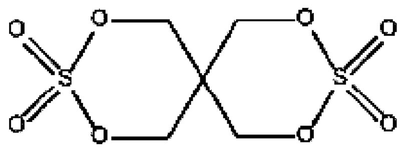,

where $R_1$, and $R_2$ each independently include a hydrogen atom, $C_1$-$C_6$ alkyl,

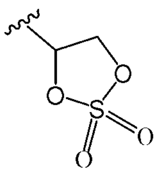, 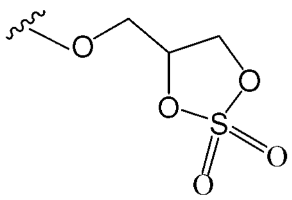, or 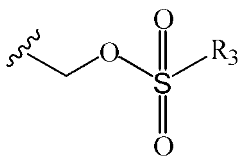,

and $R_3$ includes $C_1$-$C_6$ alkyl.In the present application, the term "$C_1$-$C_6$ alkyl" can be understood as an alkyl group having 1 to 6 carbon atoms, such as methyl ($-CH_3$), ethyl ($-CH_2CH_3$), n-propyl ($-CH_2CH_2CH_3$), isopropyl ($-CH(CH_3)_2$), n-butyl ($-CH_2CH_2CH_2CH_3$), tert-butyl ($-C(CH_3)_3$), n-pentyl ($-CH_2CH_2CH_2CH_2CH_3$), isopentyl ($-CH(CH_3)CH_2CH_2CH_3$), 2-methyl-butyl ($-CH_2CH(CH_3)CH_2CH_3$), n-hexyl ($CH_3(CH_2)_4CH_2-$), 2-methyl-pentyl ($-CH_3CH_2CH_2CH(CH_3)_2$), etc.

It should be noted that in the above

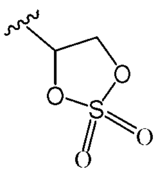, 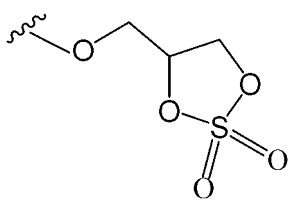,

and

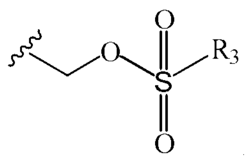

structures, the bent bond "~" refers to the connection site on the molecular structure, that is, the connection site replacing $R_1$ and $R_2$, in the

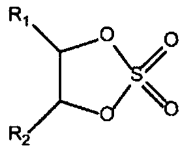

structure.

As an example, the first additive may include at least one of the following structural formulas:

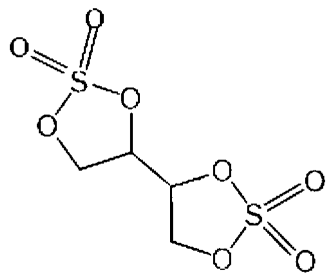

Formula 1-1 ,

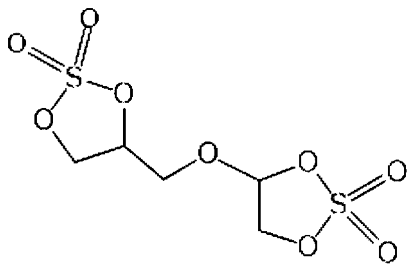

Formula 1-2 ,

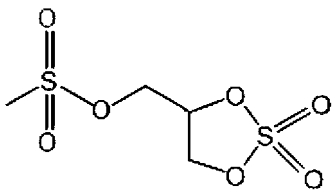

Formula 1-3 ,

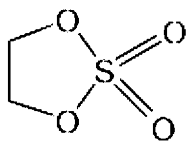

Formula 1-4 ,

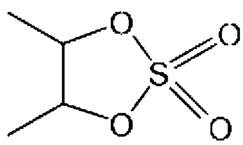

Formula 1-5 ,

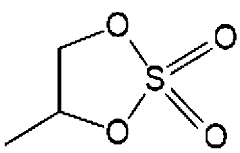

Formula 1-6 ,

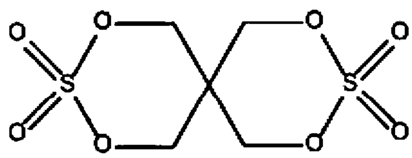

Formula 1-7 ,

and

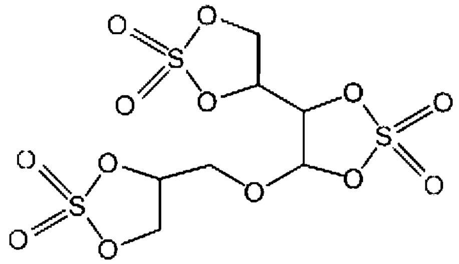

Formula 1-8 .

Therefore, the first additive of the above-mentioned structural formula in the present application can provide a sulfate ester group with a high reduction potential. The group can accept electrons from the negative electrode surface during the battery charging with a preferential self-reduction reaction. The reduction product is deposited at the negative electrode interface and participates in the formation of the negative electrode solid electrolyte interface (SEI film). The SEI film has high stability and can effectively inhibit the reduction and decomposition of the electrolyte solution at the negative electrode, and will not continuously consume the active lithium of the positive electrode, thereby improving the battery cycling performance and high-temperature storage life.

In some embodiments of the present application, the content $W_1$ of the first additive satisfy: $0.05\% \le W_1 \le 2\%$, e.g. $0.05\% \le W_1 \le 1.9\%$, $0.07\% \le W_1 \le 1.8\%$, $0.1\% \le W_1 \le 1.7\%$, $0.1\% \le W_1 \le 1.6\%$, $0.12\% \le W_1 \le 1.5\%$, $0.13\% \le W_1 \le 1.4\%$, $0.14\% \le W_1 \le 1.3\%$, $0.15\% \le W_1 \le 1.2\%$, $0.16\% \le W_1 \le 1.1\%$, $0.16\% \le W_1 \le 1\%$,$0.17\% \le W_1 \le 0.9\%$, $0.18\% \le W_1 \le 0.8\%$, $0.19\% \le W_1 \le 0.7\%$, $0.2\% \le W_1 \le 0.6\%$, $0.25\% \le W_1 \le 0.55\%$, $0.3\% \le W_1 \le 0.5\%$, $0.35\% \le W_1 \le 0.45\%$, $0.4\% \le W_1 \le 0.45\%$, etc. In some other embodiments of the present application, the content $W_1$ of the first additive satisfy: preferably $0.05\% \le W_1 \le 1.5\%$, further $0.1\% \le W_1 \le 1\%$. Therefore, adding the first additive in this content to the electrolyte solution of the present application can not only provide sufficient sulfate ester groups to participate in the formation of the negative electrode solid electrolyte interface (SEI film), effectively inhibit the reduction and decomposition of the electrolyte solution at the negative electrode, and improve the battery cycling performance and high-temperature storage life, but also the formed SEI film is stable and relatively thin, with a low impedance, thereby improving the power performance of the battery.

In some embodiments of the present application, the second additive includes:

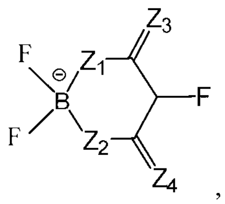

,

where $Z_1$-$Z_4$, each independently include an oxygen atom or a sulfur atom.

As an example, the second additive includes at least one of the following structural formulas:

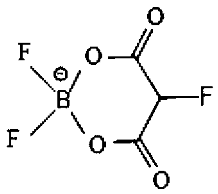

Formula 2-1 ,

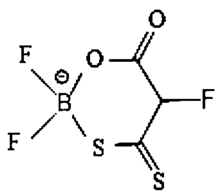

Formula 2-2 ,

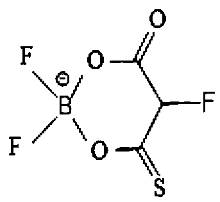

Formula 2-3 , and

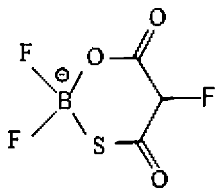

Formula 2-4 .

Therefore, the second additive having the above composition can decompose at the positive electrode interface, and the decomposition product is rich in carboxylate. The carboxylate produced by the second additive combines with the cations in the electrolyte solution and is deposited at the positive electrode interface to participate in the formation of the positive electrode solid electrolyte interface (CEI film), thereby inhibiting the oxidation reaction of the first additive on the positive electrode side to produce a gas, and improving the high-temperature storage performance of the battery. It should be noted that the second additive may be provided in the form of a corresponding lithium salt, such as lithium 2-fluoromalonate (difluoro)borate.

In some embodiments of the present application, the content $W_2$ of the second additive satisfy: $0.05\% \le W_2 \le 3\%$, e.g. $0.05\% \le W_2 \le 2.9\%$, $0.07\% \le W_2 \le 2.8\%$, $0.1\% \le W_2 \le 2.7\%$,$0.1\% \le W_2 \le 2.6\%$, $0.12\% \le W_2 \le 2.5\%$,

$0.13\%\leq W_2\leq 2.4\%$,$0.14\%\leq W_2\leq 2.3\%$, $0.15\%\leq W_2\leq 2.2\%$, $0.16\%\leq W_2\leq 2.1\%$, $0.16\%\leq W_2\leq 2\%$, $0.17\%\leq W_2\leq 1.9\%$, $0.18\%\leq W_2\leq 1.8\%$, $0.19\%\leq W_2\leq 1.7\%$, $0.2\%\leq W_2\leq 1.6\%$, $0.2\%\leq W_2\leq 1.5\%$, $0.2\%\leq W_2\leq 1.4\%$, $0.2\%\leq W_2\leq 1.3\%$, $0.2\%\leq W_2\leq 1.2\%$,$0.2\%\leq W_2\leq 1.1\%$, $0.2\%\leq W_2\leq 1\%$,$0.2\%\leq W_2\leq 0.9\%$, $0.2\%\leq W_2\leq 0.8\%$, $0.2\%\leq W_2\leq 0.7\%$, $0.2\%\leq W_2\leq 0.6\%$, $0.25\%\leq W_2\leq 0.55\%$, $0.3\%\leq W_2\leq 0.5\%$, $0.35\%\leq W_2\leq 0.45\%$, $0.4\%\leq W_2\leq 0.45\%$, etc. In some other embodiments of the present application, the content $W_2$ of the second additive satisfy: $0.1\%\leq W_2\leq 2\%$, further $0.1\%\leq W_2\leq 1\%$. Therefore, in the electrolyte solution of the present application, the second additive at this content is added, which can participate in film formation at the positive electrode interface, effectively inhibit the oxidation of the electrolyte solution at the positive electrode, and improve the cycling performance and high-temperature storage performance of the battery.

In some embodiments of the present application, the third additive can include at least one of fluorosulfonate, tetrafluoroborate, difluorophosphate, difluoro(oxalato)borate, bis(oxalato)borate and difluorobis(oxalato)phosphate. The third additive having such a composition can decompose to produce small molecules, which can be deposited on the positive electrode solid electrolyte interface to make up for the loose and dispersed positive electrode solid electrolyte interface formed by the second additive on the positive electrode surface, thereby obtaining a denser positive electrode solid electrolyte interface and improving the cycling performance and high-temperature storage performance of the battery. In some embodiments of the present application, the third additive is added to the electrolyte solution in the form of a corresponding lithium salt, such as lithium fluorosulfonate, lithium tetrafluoroborate, lithium difluorophosphate, lithium difluoro(oxalato)borate, lithium bis(oxalato)borate and lithium difluorobis(oxalato)phosphate.

In some embodiments of the present application, the content $W_3$ of the third additive satisfy: $0.01\%\leq W_3\leq 5\%$, e.g. $0.03\%\leq W_3\leq 4.8\%$,$0.05\%\leq W_3\leq 4.5\%$, $0.07\%\leq W_3\leq 4.3\%$, $0.1\%\leq W_3\leq 4\%$, $0.12\%\leq W_3\leq 3.7\%$, $0.15\%\leq W_3\leq 3.5\%$, $0.17\%\leq W_3\leq 3.2\%$, $0.2\%\leq W_3\leq 3\%$, $0.22\%\leq W_3\leq 2.8\%$, $0.25\%\leq W_3\leq 2.5\%$, $0.27\%\leq W_3\leq 2.2\%$, $0.3\%\leq W_3\leq 2\%$, $0.32\%\leq W_3\leq 1.8\%$,$0.35\%\leq W_3\leq 1.5\%$, $0.37\%\leq W_3\leq 1.2\%$, $0.4\%\leq W_3\leq 1\%$, $0.5\%\leq W_3\leq 0.9\%$, $0.6\%\leq W_3\leq 0.8\%$, $0.6\%\leq W_3\leq 0.7\%$, etc. In some other embodiments of the present application, the content $W_3$ of the third additive satisfy: $0.05\%\leq W_3\leq 3\%$, further $0.1\%\leq W_3\leq 2\%$. Therefore, in the electrolyte solution of the present application, the third additive at this content is used, which can assist the second additive in film formation, obtain a denser positive electrode solid electrolyte interface, and improve the cycling performance and high-temperature storage performance of the battery, and the third additive at this content will not deteriorate the ionic conductivity of the electrolyte solution, thereby improving the power performance of the battery.

The electrolyte solution functions to conduct ions between the positive electrode plate and the negative electrode plate. The electrolyte solution may include, in addition to the first additive, the second additive and the third additive, an electrolyte salt and a solvent.

As an example, the electrolyte salt may include at least one of lithium hexafluorophosphate ($LiPF_6$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium bis(oxalato)borate (LiBOB) and lithium tetrafluoro(oxalato)phosphate (LiTFOP).

As an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethylene glycol dimethyl ether (DME), ethyl methyl sulfone (EMS) and diethyl sulfone (ESE).

In some embodiments of the present application, the electrolyte solution further includes other additives. For example, the other additives may include a negative electrode film-forming additive, or may also include a positive electrode film-forming additive, or may also include an additive that may improve certain properties of a battery, such as an additive that improves the overcharge performance of a battery, an additive that improves the high-temperature performance of a battery, and an additive that improves the low-temperature performance of a battery.

In a second aspect, the present application provides a battery, including the electrolyte solution of the first aspect. As a result, the battery has excellent power performance, cycling performance and high-temperature storage performance.

A battery refers to a battery which may continue to service by means of activating an active material by means of charging after the battery is discharged.

It can be understood that the battery proposed in the present application can be a lithium-ion battery.

Typically, a battery includes a positive electrode plate, a negative electrode plate, a separator and an electrolyte solution. During the charge/discharge of the battery, active ions are intercalated and de-intercalated back and forth between the positive electrode plate and the negative electrode plate. The separator is arranged between the positive electrode plate and the negative electrode plate, and plays the role of separation. The electrolyte functions to conduct ions between the positive electrode plate and the negative electrode plate.

[Positive electrode plate]

In a battery, the positive electrode plate generally includes a positive electrode current collector and a positive electrode active material layer disposed on the positive electrode current collector. The positive electrode active material layer includes a positive electrode active material.

The positive electrode current collector may be a conventional metal foil or a composite current collector (the composite current collector may be formed by disposing a metal material on a polymer substrate). As an example, the positive electrode current collector may be an aluminum foil.

The specific type of the positive electrode active material is not limited. An active material known in the art that may be used for a positive electrode of a battery may be used, and may be selected by those skilled in the art according to actual requirements.

As an example, the positive electrode active material may include, but is not limited to, at least one of a lithium transition metal oxide, an olivine-structured lithium-containing phosphate, and respective modified compounds thereof. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include, but is not limited to, at least one of lithium iron phosphate, a lithium iron phosphate-carbon composite, lithium manganese phosphate, a lithium manganese phosphate-carbon composite, lithium iron manganese phosphate, a lithium iron manganese phosphate-carbon composite and modified compounds thereof. These materials are commercially available.

The modified compounds of the above materials may be doping-modified and/or surface-coated modified materials.

The positive electrode active material layer may also optionally include a binder, a conductive agent and other optional auxiliary agents.

As an example, the conductive agent may include at least one of superconducting carbon, acetylene black, carbon black, Ketjen black, carbon dots, carbon nanotubes, Super P (SP), graphene, and carbon nanofibers.

As an example, the binder may include at least one of a styrene-butadiene rubber (SBR), a water-based acrylic resin, polyvinylidene fluoride (PVDF), polytetrafluoroethylene (PTFE), an ethylene-vinyl acetate copolymer (EVA), polyacrylic acid (PAA), carboxymethyl cellulose (CMC), polyvinyl alcohol (PVA), and polyvinyl butyral (PVB).

In some embodiments of the present application, the positive electrode active material in the positive electrode plate includes: $Li_xNi_aCo_bMn_cM_dO_{2-e}$, where M includes at least one of aluminum, zirconium, boron, magnesium, zinc, calcium and titanium, $0.65 \le a \le 0.98$, $0 \le b \le 0.3$, $0.02 \le c \le 0.3$, $0 \le d \le 0.3$, a+b+c+d=1, $0.1 \le x \le 1.3$, and $0 \le e \le 1.9$.

In some embodiments of the present application, in the positive electrode active material $Li_xNi_aCo_bMn_cM_dO_{2-e}$, x can be $0.1 \le x \le 1.3$, for example, 0.1-1.2, 0.2-1.1, 0.3-1, 0.4-0.9, 0.5-0.8, 0.6-0.7, etc. In some other embodiments of the present application, $0.2 \le x \le 1.2$. Thus, the positive electrode active material includes lithium ions in such a content that the battery has a higher capacity.

It should be noted that in the positive electrode plate, battery or electrical device, lithium ions will be consumed as the battery undergoes processes such as formation and cycle, so the measured lithium content x in the positive electrode active material may be less than 1. At the same time, if the positive electrode and the negative electrode plates are supplemented with lithium, after the battery undergoes the formation and cycle processes, the measured lithium content x in the positive electrode active material will be greater than 1.

In some embodiments of the present application, in the positive electrode active material $Li_xNi_aCo_bMn_cM_dO_{2-e}$, a can be $0.65 \le a \le 0.98$, for example, $0.68 \le a \le 0.95$, $0.7 \le a \le 0.92$, $0.75 \le a \le 0.9$, $0.8 \le a \le 0.88$, $0.82 \le a \le 0.85$, etc. In other embodiments of the present application, $0.7 \le a \le 0.92$. Therefore, the positive electrode active material having such a composition has an excellent energy density.

In some embodiments of the present application, in the positive electrode active material $Li_xNi_aCo_bMn_cM_dO_{2-e}$, b can be $0 \le b \le 0.3$, for example, $0.001 \le b \le 0.3$, $0.005 \le b \le 0.3$, $0.1 \le b \le 0.3$, $0.12 \le b \le 0.28$, $0.15 \le b \le 0.25$, $0.17 \le b \le 0.23$, $0.2 \le b \le 0.22$, etc. In some other embodiments of the present application, $0 \le b \le 0.2$. Thus, the positive electrode active material includes the cobalt element in the content, which can significantly improve the electronic impedance and ionic impedance of the positive electrode active material and inhibit the DCR increase rate during the battery cycling.

In some embodiments of the present application, in the positive electrode active material $Li_xNi_aCo_bMn_cM_dO_{2-e}$, c can be $0.02 \le c \le 0.3$, for example, $0.02 \le c \le 0.3$, $0.05 \le c \le 0.28$, $0.07 \le c \le 0.25$, $0.1 \le c \le 0.22$, $0.12 \le c \le 0.2$, $0.15 \le c \le 0.18$, $0.15 \le c \le 0.16$, etc. In some other embodiments of the present application, $0.02 \le c \le 0.2$. Thus, the positive electrode active material includes the manganese element in this content, which can improve the stability of the positive electrode active material.

In some embodiments of the present application, in the positive electrode active material $Li_xNi_aCo_bMn_cM_dO_{2-e}$, M may include at least one of aluminum, zirconium, boron, magnesium, zinc, calcium and titanium. Therefore, by doping the positive electrode active material of the present application with such an M element, the stability of the positive

electrode active material can be improved.

In some embodiments of the present application, in the positive electrode active material $Li_xNi_aCo_bMn_cM_dO_{2-e}$, d can be 0≤d≤0.3, for example, 0.0001≤d≤0.3, 0.02≤d≤0.3, 0.05≤d≤0.28, 0.07≤d≤0.25, 0.1≤d≤0.22, 0.12≤d≤0.2, 0.15≤d≤0.18, 0.15≤d≤0.16, etc. In some other embodiments of the present application, 0.0001≤d≤0.1. Thus, the positive electrode active material includes the manganese element in this content, which can improve the stability of the positive electrode active material.

In some embodiments of the present application, in the positive electrode active material $Li_xNi_aCo_bMn_cM_dO_{2-e}$, e can be 0≤e≤1.9, for example0.0001≤e≤1.9, 0.1≤e≤1.8,0.3≤e≤1.5, 0.5≤e≤1.2, 0.7≤e≤1, 0.9≤e≤1, etc. In some other embodiments of the present application, 0.1≤e≤1.

It should be noted that in the positive electrode plate, battery or electrical device, since the battery undergoes cycles and other processes, the oxygen element in the positive electrode active material is lost, so the measured oxygen element content 2-e in the positive electrode active material may be less than 2.

In some embodiments of the present application, the compaction density of the positive electrode plate can be 3.1 $g/cm^3$-3.7 $g/cm^3$, for example, 3.2 $g/cm^3$-3.6 $g/cm^3$, 3.3 $g/cm^3$-3.5 $g/cm^3$, 3.4 $g/cm^3$-3.5 $g/cm^3$, etc. In some other embodiments of the present application, the compaction density of the positive electrode plate is 3.2 $g/cm^3$-3.6 $g/cm^3$. As a result, the capacity retention rate of a battery containing same can be improved.

The "compaction density of the positive electrode plate" in the present application has a well-known meaning in the art and can be measured using instruments and methods well-known in the art. For example, it can be obtained by the following method:

First, a circular electrode plate with an area S (active material layers are present on both the upper and lower surfaces of the substrate) is obtained and weighed. The mass is $m_1$, ion polishing cross-section element analysis is used to confirm the electrode plate thickness d. Then, NMP (N-methylpyrrolidone) was used to wipe off the active material layers on the upper and lower surfaces of the substrate to obtain a substrate with an area S, which was weighed as $m_2$, then the compaction density of the electrode plate = $(m_1-m_2)/(2S*d)$.

In a battery, the negative electrode plate generally includes a negative electrode current collector and a negative electrode active material layer disposed on the negative electrode current collector, where the negative electrode active material layer includes a negative electrode active material.

The negative electrode current collector may be a conventional metal foil or a composite current collector (for example, a metal material may be disposed on a polymer substrate to form a composite current collector). As an example, the negative electrode current collector may be a copper foil.

The specific types of the negative electrode active material are not limited, and an active material known in the art that may be used for a negative electrode of a battery may be used, and may be selected by those skilled in the art according to actual requirements. As an example, the negative electrode active material may include, but is not limited to, at least one of artificial graphite, natural graphite, hard carbon, soft carbon, a silicon-based material, and a tin-based materials. The silicon-based material may include at least one of elemental silicon, a silicon-oxygen compound (such as silicon monoxide), a silicon-carbon composites, a silicon-nitrogen composites, and a silicon alloy. The tin-based material may include at least one of elemental tin, a tin oxide compound, and a tin alloy. These materials are commercially available.

In some embodiments, in order to further improve the energy density of the battery, the negative electrode active material may include a silicon-based material.

The negative electrode active material layer may also optionally include a binder, a conductive agent and other optional auxiliary agents.

As an example, the conductive agent may include at least one of superconducting carbon, acetylene black, carbon black, Ketjen black, carbon dots, carbon nanotubes, graphene, and carbon nanofibers.

As an example, the binder may include at least one of a styrene-butadiene rubber (SBR), a water-based acrylic resin, polyvinylidene fluoride (PVDF), polytetrafluoroethylene (PTFE), an ethylene-vinyl acetate copolymer (EVA), polyvinyl alcohol (PVA), and polyvinyl butyral (PVB).

As examples, other optional additives may include thickeners and dispersants (for example, sodium carboxymethyl cellulose CMC-Na), and PTC thermistor materials.

In some embodiments of the present application, the compaction density of the negative electrode plate is 1.3 $g/cm^3$-1.7 $g/cm^3$, for example1.4 $g/cm^3$-1.7 $g/cm^3$,1.5 $g/cm^3$-1.7 $g/cm^3$, 1.6 $g/cm^3$-1.7 $g/cm^3$etc. In some embodiments of the present application, the compaction density of the negative electrode plate is 1.4 $g/cm^3$-1.6 $g/cm^3$. Thus, the cycling performance of a battery containing same can be improved.

The "compaction density of the negative electrode plate" in the present application has a well-known meaning in the art and can be measured using instruments and methods well-known in the art. For example, the test method may refer to the above-mentioned test method of "compaction density of positive electrode plate". It should be noted that deionized water is often used to wipe the active material layer of the negative electrode.

[Separator]

As the above-mentioned separator, the present application has no special restrictions, and any known porous structure separator with electrochemical stability and mechanical stability can be selected according to actual needs. For example, it can be a single-layer or multi-layer film containing one or more of glass fibers, a non-woven fabric, polyethylene, polypropylene and polyvinylidene fluoride.

In the embodiments of the present application, the shape of the battery is not particularly limited and may be a cylindrical shape, a square shape, or any other shape. FIG. 1 shows a secondary battery 1 having a square structure as an example.

In some embodiments, the battery may include an outer package. The outer package is used to encapsulate the positive electrode plate, the negative electrode plate and the electrolyte.

In some embodiments, the outer package may include a case and a cover plate. The case may include a bottom plate and side plates connected to the bottom plate, and the bottom plate and the side plates are enclose to form an accommodating cavity. The case has an opening in communication with the accommodating cavity, and the cover plate may cover the opening to close the accommodating cavity.

The positive electrode plate, the negative electrode plate and the separator can be formed into an electrode assembly by a winding process or a lamination process. The electrode assembly is packaged in the accommodating cavity. The number of the electrode assemblies contained in the battery can be one or more, which can be adjusted according to demand.

In some embodiments, the outer package of the battery can be a hard shell, such as a hard plastic shell, an aluminum shell, or a steel shell.

The outer package of the battery may also be a soft package, such as a pouch-type soft bag. The material of the soft package may be a plastic, such as at least one of polypropylene (PP), polybutylene terephthalate (PBT), and polybutylene succinate (PBS).

In some embodiments, the batteries may be assembled into a battery module. The battery module may contain multiple batteries, and the specific number may be adjusted according to the application and capacity of the battery module.

FIG. 2 shows a battery module 2 as an example. Referring to FIG. 2, in the battery module 2, a plurality of secondary batteries 1 may be sequentially arranged in a length direction of the battery module 2. Apparently, the secondary batteries may also be arranged in any other manner. Furthermore, the plurality of secondary batteries 1 may be fixed by fasteners.

The battery module 2 may further include a case having an accommodating space in which the plurality of secondary batteries 1 are accommodated. In some embodiments, the battery modules described above may also be assembled into a battery pack, and the number of battery modules contained in the battery pack may be adjusted according to the application and capacity of the battery pack.

FIG. 3 and FIG. 4 show a battery pack 3 as an example. With reference to FIG. 3 and FIG. 4, the battery pack 3 may include a battery box and a plurality of battery modules 2 disposed in the battery box. The battery box includes an upper box 4 and a lower box 5. The upper box 4 can cover the lower box body 5 to form a closed space for accommodating the battery module 2. The plurality of battery modules 2 may be arranged in the battery box in any manner.

[Electrical device]

The present application also provides an electrical device, which includes at least one of the battery, battery module and battery pack. The battery, battery module or battery pack can be used as a power source for the electrical device, or as an energy storage unit for the electrical device. The electrical device may be, but is not limited to, a mobile device (such as a mobile phone, a laptop computer), an electric vehicle (such as a pure electric vehicle, a hybrid electric vehicle, a plug-in hybrid electric vehicle, an electric bicycle, an electric scooter, an electric golf cart, an electric truck), an electric train, a ship, a satellite, and an energy storage system.

A battery, battery module or battery pack may be used for the electrical device according to the usage requirements thereof.

FIG. 5 shows an electrical device as an example. The electrical device includes a pure electric vehicle, a hybrid electric vehicle, or a plug-in hybrid electric vehicle. In order to satisfy the requirements of the electrical device for a high power and a high energy density of a lithium-ion battery, the battery pack or the battery module may be used.

As another example, the electrical device may include a mobile phone, a tablet computer, and a laptop computer. The electrical device is usually required to be light and thin, and a lithium-ion battery may be used as a power source.

In order to make the technical problems, technical solutions and beneficial effects solved by the embodiments of the present application clearer, further detailed description will be given below with reference to the embodiments and the accompanying drawings. It is clear that the described embodiments are a part of the embodiments of the present

application, rather than all of the embodiments. The following descriptions of at least one exemplary embodiment are actually merely illustrative, and are not intended to limit the present application and application thereof. All other embodiments obtained by a person of ordinary skill in the art based on embodiments of the present application without creative efforts shall fall within the protection scope of the present application.

Embodiment 1

1. Preparation of positive electrode plate

A positive electrode active material of $LiNi_{0.8}Co_{0.1}Mn_{0.09}Al_{0.01}O_2$, a conductive agent of Super P, and a binder of polyvinylidene fluoride (PVDF) were prepared into a positive electrode slurry in N-methylpyrrolidone (NMP), where the solid content in the positive electrode slurry was 50wt%, and the mass ratio of $LiNi_{0.5}Co_{0.2}Mn_{0.3}O_2$ to Super P to PVDF in the solid component was 8:1:1. The positive electrode slurry was applied to the upper and lower surfaces of the current collector aluminum foil, dried at 85°C and then cold pressed, followed by trimming, slicing and slitting, and then drying at 85°C under vacuum conditions for 4 h to make the positive electrode plate.

3. Preparation of negative electrode plate

Graphite, silicon monoxide, a conductive agent of Super P, a thickener of carboxymethyl cellulose (CMC), and a binder of styrene butadiene rubber (SBR) were mixed uniformly in deionized water to form a negative electrode slurry, where the solid content in the negative electrode slurry was 30wt%, and the mass ratio of graphite to silicon suboxide to Super P to CMC to the binder of styrene butadiene rubber (SBR) in the solid component was 85:3:7:3:2. The negative electrode slurry was applied to the upper and lower surfaces of the current collector copper foil and dried at 85°C, followed by cold pressing, trimming, slicing, slitting, and then drying at 120°C under vacuum conditions for 12 h to make a negative electrode plate.

3. Preparation of electrolyte solution

In a glove box filled with argon (water content <10 ppm and oxygen content <1 ppm), the first additive, the second additive and the third additive (the compositions of the first additive, the second additive and the third additive were as shown in Table 1) were added to an organic solvent (the organic solvent included ethylene carbonate (EC) and ethyl methyl carbonate (EMC), and the mass ratio of EC to EMC was 3:7) and mixed uniformly, and $LiPF_6$ and LiFSI were then added. After the lithium salt was completely dissolved, an electrolyte solution with a lithium salt concentration of 1 mol/L was obtained.

4. Separator

A 16 μm polyethylene film was used as a separator.

5. Preparation of lithium-ion battery

The positive electrode plate, the separator, and the negative electrode plate were stacked in sequence, such that the separator was in the middle of the positive and negative electrode plates to isolate the positive and negative electrodes, followed by winding to obtain the bare battery cell, with tabs being welded and placed in the outer package. The prepared electrolyte solution was injected into the dried battery cell, and subjecting to the procedures, such as packaging, leaving to stand, formation, shaping and capacity test to complete the preparation of the lithium-ion battery (the soft-bag lithium-ion battery has a thickness of 4.0 mm, a width of 60 mm, and a length of 140 mm).

The preparation method for the lithium ion batteries of Embodiments 2-30 and Comparative examples 1-7 were the same as that of Embodiment 1, except that the compositions of the additives in the electrolyte solution were different, as shown in Table 1.

Table 1

| | First additive | | Second additive | | Third additive | | $W_1$:$W_2$: $W_3$ |
|---|---|---|---|---|---|---|---|
| | Compositi on | Content $W_1$ | Composition | Content $W_2$ | Composition | Content $W_3$ | |
| Embodiment 1 | Formula 1-1 | 0.10% | Lithium 2-fluoro-malonate (di-fluoro)borate | 0.10% | Lithium fluorosulfonate | 0.10% | 1:1:1 |
| Embodiment 2 | Formula 1-1 | 1.00% | Lithium 2-fluoro-malonate (di-fluoro)borate | 0.10% | Lithium fluorosulfonate | 2.50% | 1:0.1:2.5 |
| Embodiment 3 | Formula 1-1 | 1.00% | Lithium 2-fluoro-malonate (di-fluoro)borate | 1.50% | Lithium fluorosulfonate | 0.02% | 1:1.5:0.0 2 |
| Embodiment 4 | Formula 1-1 | 1.00% | Lithium 2-fluoro-malonate (di-fluoro)borate | 0.20% | Lithium fluorosulfonate | 2.30% | 1:0.2:2.3 |
| Embodiment 5 | Formula 1-1 | 1.00% | Lithium 2-fluoro-malonate (di-fluoro)borate | 1.20% | Lithium fluorosulfonate | 0.05% | 1:1.2:0.0 5 |
| Embodiment 6 | Formula 1-1 | 1.00% | Lithium 2-fluoro-malonate (di-fluoro)borate | 0.20% | Lithium fluorosulfonate | 2.00% | 1:0.2:2 |
| Embodiment 7 | Formula 1-1 | 1.00% | Lithium 2-fluoro-malonate (di-fluoro)borate | 1.00% | Lithium fluorosulfonate | 0.10% | 1:1:0.1 |
| Embodiment 8 | Formula 1-1 | 1.00% | Lithium 2-fluoro-malonate (di-fluoro)borate | 0.50% | Lithium fluorosulfonate | 1.00% | 1:0.5:1 |
| Embodiment 9 | Formula 1-1 | 1.00% | Lithium 2-fluoro-malonate (di-fluoro)borate | 1.50% | Lithium fluorosulfonate | 1.00% | 1:1.5:1 |
| Embodiment 10 | Formula 1-1 | 1.00% | Lithium 2-fluoro-malonate (di-fluoro)borate | 0.50% | Lithium fluorosulfonate | 0.10% | 1:0.5:0.1 |
| Embodiment 11 | Formula 1-1 | 1.00% | Lithium 2-fluoro-malonate (di-fluoro)borate | 0.50% | Lithium fluorosulfonate | 0.50% | 1:0.5:0.5 |
| Embodiment 12 | Formula 1-1 | 1.00% | Lithium 2-fluoro-malonate (di-fluoro)borate | 0.50% | Lithium fluorosulfonate | 1.50% | 1:0.5:1.5 |
| Embodiment 13 | Formula 1-1 | 1.00% | Lithium 2-fluoro-malonate (di-fluoro)borate | 0.50% | Lithium fluorosulfonate | 2.00% | 1:0.5:2 |
| Embodiment 14 | Formula 1-1 | 0.05% | Lithium 2-fluoro-malonate (di-fluoro)borate | 0.05% | Lithium fluorosulfonate | 0.10% | 1:1:2 |
| Embodiment 15 | Formula 1-1 | 1.50% | Lithium 2-fluoro-malonate (di-fluoro)borate | 1.50% | Lithium fluorosulfonate | 3.00% | 1:1:2 |

(continued)

| | First additive | | Second additive | | Third additive | | $W_1$:$W_2$: $W_3$ |
|---|---|---|---|---|---|---|---|
| | Compositi on | Content $W_1$ | Composition | Content $W_2$ | Composition | Content $W_3$ | |
| Embodiment 16 | Formula 1-1 | 2.00% | Lithium 2-fluoro-malonate (di-fluoro)borate | 3.00% | Lithium fluorosulfonate | 5.00% | 1:1.5:2.5 |
| Embodiment 17 | Formula 1-1 | 2.00% | Lithium 2-fluoro-malonate (di-fluoro)borate | 3.00% | Lithium fluorosulfonate | 4.00% | 1:1.5:2 |
| Embodiment 18 | Formula 1-7 | 1.00% | Lithium 2-fluoro-malonate (di-fluoro)borate | 0.50% | Lithium fluorosulfonate | 1.00% | 1:0.5:1 |
| Embodiment 19 | Formula 1-3 | 1.00% | Lithium 2-fluoro-malonate (di-fluoro)borate | 0.50% | Lithium fluorosulfonate | 1.00% | 1:0.5:1 |
| Embodiment 20 | Formula 1-4 | 1.00% | Lithium 2-fluoro-malonate (di-fluoro)borate | 0.50% | Lithium fluorosulfonate | 1.00% | 1:0.5:1 |
| Embodiment 21 | Formula 1-1 | 1.00% | Lithium 2-fluoro-malonate (di-fluoro)borate | 0.50% | Lithium tetrafluoroborate | 1.00% | 1:0.5:1 |
| Embodiment 22 | Formula 1-1 | 1.00% | Lithium 2-fluoro-malonate (di-fluoro)borate | 0.50% | Lithium difluorophosphate | 1.00% | 1:0.5:1 |
| Embodiment 23 | Formula 1-1 | 1.00% | Lithium 2-fluoro-malonate (di-fluoro)borate | 0.10% | Lithium tetrafluoroborate | 0.02% | 1:0.1:0.0 2 |
| Embodiment 24 | Formula 1-1 | 1.50% | Lithium 2-fluoro-malonate (di-fluoro)borate | 2.25% | Lithium tetrafluoroborate | 3.75% | 1:1.5:2.5 |
| Embodiment 25 | Formula 1-7 | 1.00% | Lithium 2-fluoro-malonate (di-fluoro)borate | 0.10% | Lithium difluorophosphate | 1.00% | 1:0.1:1 |
| Embodiment 26 | Formula 1-7 | 1.00% | Lithium 2-fluoro-malonate (di-fluoro)borate | 1.00% | Lithium difluorophosphate | 0.02% | 1:1:0.02 |
| Embodiment 27 | Formula 1-7 | 0.50% | Lithium 2-fluoro-malonate (di-fluoro)borate | 0.50% | Lithium difluorophosphate | 0.50% | 1:1:1 |
| Embodiment 28 | Formula 1-3 | 1.50% | Lithium 2-fluoro-malonate (di-fluoro)borate | 1.50% | Lithium fluorosulfonate | 2.25% | 1:1:1.5 |
| Embodiment 29 | Formula 1-1 | 1.30% | Lithium 2-fluoro-malonate (di-fluoro)borate | 2.00% | Lithium fluorosulfonate | 0.65% | 1:1.5:0.5 |
| Embodiment 30 | Formula 1-1 | 0.05% | Lithium 2-fluoro-malonate (di-fluoro)borate | 0.05% | Lithium fluorosulfonate | 0.01% | 1:1:0.2 |

(continued)

| | First additive | | Second additive | | Third additive | | $W_1$:$W_2$: $W_3$ |
|---|---|---|---|---|---|---|---|
| | Composition | Content $W_1$ | Composition | Content $W_2$ | Composition | Content $W_3$ | |
| Comparative example 1 | Formula 1-1 | 1.50% | Lithium 2-fluoro-malonate (di-fluoro)borate | 3.00% | Lithium fluorosulfonate | 4.50% | 1:2:3 |
| Comparative example 2 | Formula 1-1 | 1.00% | Lithium 2-fluoro-malonate (di-fluoro)borate | 1.00% | Lithium difluorophosphate | 3.00% | 1:1:3 |
| Comparative example 3 | Formula 1-1 | 1.00% | Lithium 2-fluoro-malonate (di-fluoro)borate | 0.09% | Lithium difluorophosphate | 1.00% | 1:0.09:1 |
| Comparative example 4 | Formula 1-1 | 0.10% | Lithium 2-fluoro-malonate (di-fluoro)borate | 0.10% | \ | \ | \ |
| Comparative example 5 | Formula 1-1 | 0.10% | \ | \ | Lithium difluorophosphate | 1.00% | \ |
| Comparative example 6 | \ | \ | \ | \ | \ | \ | \ |
| Comparative example 7 | Formula 1-1 | 1.00% | Lithium 2-fluoro-malonate (di-fluoro)borate | 2.00% | Lithium fluorosulfonate | 1.00% | 1:2:1 |

The cycling performance, high-temperature storage performance and power performance of the lithium ion batteries obtained in Embodiments 1-30 and Comparative examples 1-7 were characterized. The characterization results were shown in Table 2.

(1) Cycling performance test of lithium-ion battery:

The ambient temperature was controlled at 25°C, the battery was charged to 4.25V at 1C, then charged to 0.05C at a constant voltage, left to stand for 10 min, and then discharged to 2.8V at 1C. The discharge capacity was recorded as $C_0$, 300 cycles were carried out following the above charge and discharge process, and the discharge capacity of the 300th cycle was $C_1$, the cycle capacity retention rate of the battery cell = $C_1/C_0$*100%.

(2) High-temperature storage performance test of lithium-ion battery:

At 25°C, the battery was charged at a constant current of 1C to 4.25V, then charge at a constant voltage to a current of 0.05C, left to stand for 10 min, then discharge at 1C to 2.8V. the discharge capacity $D_0$ was recorded. Then the battery was placed in a constant temperature box at 60°C and kept at the temperature for 60 days, then taken out. After the surface temperature of the battery returned to room temperature, the battery was discharged to 2.8V at 1C, then charged to 4.25V at 1C, charged to 0.05C at a constant voltage, left to stand for 10 minutes, then discharged to 2.8V at 1C. The discharge capacity $D_1$ was recorded, the high-temperature storage capacity retention rate of the battery = $D_1/D_0$*100%.

(3) Power performance test of lithium-ion battery

The battery was charged at 1C to 4.25V, then to 0.05C at a constant voltage and left to stand for 30 min, then discharged at 1C for 0.5 h and left to stand for 30 min, with the voltage V1 after standing being recorded, then discharged at 4C for 30 s, with a 0.1 S interval between sampling points. the voltage V2 at the end of the discharging was recorded, battery DCR (DC internal resistance)=(V1-V2)/I, with I=4C.

Table 2

| | Cycling performance (%) | Storage life (%) | DCR (mhom) |
|---|---|---|---|
| Embodiment 1 | 98.60 | 95.30 | 12 |
| Embodiment 2 | 93.80 | 92.00 | 32 |
| Embodiment 3 | 93.40 | 91.90 | 30 |
| Embodiment 4 | 95.70 | 94.60 | 21 |
| Embodiment 5 | 96.00 | 94.90 | 20 |
| Embodiment 6 | 96.30 | 95.10 | 19 |
| Embodiment 7 | 96.00 | 95.00 | 20 |
| Embodiment 8 | 99.10 | 96.90 | 5 |
| Embodiment 9 | 94.00 | 92.30 | 26 |
| Embodiment 10 | 98.00 | 95.60 | 14 |
| Embodiment 11 | 98.40 | 95.90 | 10 |
| Embodiment 12 | 98.50 | 96.40 | 9 |
| Embodiment 13 | 98.00 | 96.10 | 11 |
| Embodiment 14 | 97.90 | 95.00 | 19 |
| Embodiment 15 | 97.50 | 95.10 | 20 |
| Embodiment 16 | 93.20 | 92.00 | 34 |
| Embodiment 17 | 93.50 | 92.40 | 32 |
| Embodiment 18 | 98.70 | 96.70 | 7 |
| Embodiment 19 | 99.00 | 96.90 | 6 |
| Embodiment 20 | 98.70 | 96.80 | 7 |
| Embodiment 21 | 98.80 | 96.60 | 7 |
| Embodiment 22 | 98.90 | 96.90 | 6 |
| Embodiment 23 | 93.20 | 91.70 | 31 |
| Embodiment 24 | 92.50 | 91.10 | 35 |
| Embodiment 25 | 95.20 | 94.30 | 24 |
| Embodiment 26 | 95.00 | 94.10 | 26 |
| Embodiment 27 | 98.80 | 96.20 | 7 |
| Embodiment 28 | 98.90 | 96.40 | 6 |
| Embodiment 29 | 93.70 | 92.10 | 28 |
| Embodiment 30 | 93.80 | 93.00 | 26 |
| Comparative example 1 | 83.20 | 80.30 | 78 |
| Comparative example 2 | 85.40 | 84.30 | 65 |
| Comparative example 3 | 85.00 | 83.70 | 67 |
| Comparative example 4 | 80.20 | 78.90 | 82 |
| Comparative example 5 | 76.50 | 75.40 | 86 |
| Comparative example 6 | 70.40 | 74.30 | 90 |
| Comparative example 7 | 92.00 | 90.20 | 38 |

As can be seen from Table 2, the batteries of Embodiments 1-30 have excellent cycling performance, storage life and lower DCR compared to those of Comparative examples 1-7, which indicates that the electrolyte solution of the

composition of the present application can improve the cycling performance, storage performance and power performance of the battery.

In the specification, the explanation with reference to the terms such as "an embodiment", "some embodiments", "exemplary embodiments", "specific examples", or "some examples" means that specific features, structures, materials, or characteristics described in combination with the embodiment(s) or example(s) are included in at least one embodiment or example of the present application. In the present specification, the exemplary expressions of the above terms do not necessarily refer to the same embodiment or example. Furthermore, the specific features, structures, materials, or characteristics described may be combined in any suitable manner in any one or more embodiments or examples. Furthermore, those skilled in the art may combine and associate different embodiments or examples and features of different embodiments or examples described in this specification without contradiction.

Although the embodiments of the present application have been shown and described above, it can be understood that the above embodiments are exemplary and cannot be understood as limitations on the present application. Those skilled in the art can change, modify, replace and modify the above embodiments within the scope of the present application.

## Claims

1. An electrolyte solution comprising a first additive, a second additive and a third additive, wherein the first additive comprises a sulfate ester compound;

   the second additive comprises:

   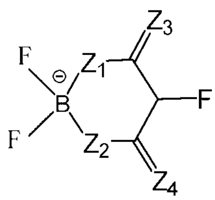,

   wherein $Z_1$-$Z_4$, each independently comprise an oxygen atom or a sulfur atom;
   the third additive comprises at least one of fluorosulfonate, tetrafluoroborate, difluorophosphate, difluoro(oxalato)borate, bis(oxalato)borate and difluorobis(oxalato)phosphate;
   based on the total mass of the electrolyte solution, content $W_1$ of the first additive, content $W_2$ of the second additive and content $W_3$ of the third additive satisfy $W_1$:$W_2$:$W_3$=1:(0.1-1.5):(0.02-2.5).

2. The electrolyte solution according to claim 1, wherein $W_1$:$W_2$:$W_3$=1:(0.2-1.2):(0.05-2.3).

3. The electrolyte solution according to claim 1 or 2, wherein $W_1$:$W_2$:$W_3$=1:(0.2-1):(0.1-2).

4. The electrolyte solution according to any one of claims 1-3, wherein the content $W_1$ of the first additive satisfies: $0.05\%\leq W_1\leq 2\%$.

5. The electrolyte solution according to any one of claims 1-4, wherein the content $W_1$ of the first additive satisfies: $0.05\%\leq W_1\leq 1.5\%$.

6. The electrolyte solution according to any one of claims 1-5, wherein the content $W_1$ of the first additive satisfies: $0.1\%\leq W_1\leq 1\%$.

7. The electrolyte solution according to any one of claims 1-6, wherein the content $W_2$ of the second additive satisfies: $0.05\%\leq W_2\leq 3\%$.

8. The electrolyte solution according to any one of claims 1-7, wherein the content $W_2$ of the second additive satisfies: $0.1\%\leq W_2\leq 2\%$.

9. The electrolyte solution according to any one of claims 1-8, wherein the content $W_2$ of the second additive satisfies: $0.1\%\leq W_2\leq 1\%$.

**10.** The electrolyte solution according to any one of claims 1-9, wherein the content $W_3$ of the third additive satisfies: $0.01\% \leq W_3 \leq 5\%$.

**11.** The electrolyte solution according to any one of claims 1-10, wherein the content $W_3$ of the third additive satisfies: $0.05\% \leq W_3 \leq 3\%$.

**12.** The electrolyte solution according to any one of claims 1-11, wherein the content $W_3$ of the third additive satisfies: $0.1\% \leq W_3 \leq 2\%$.

**13.** The electrolyte solution according to any one of claims 1-12, wherein the first additive comprises at least one of

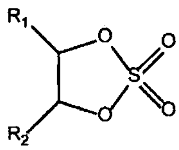 and 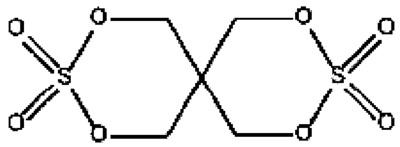 ,

wherein $R_1$, and $R_2$ each independently comprise a hydrogen atom, $C_1$-$C_6$ alkyl,

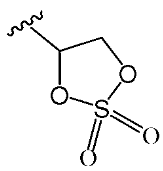 ,

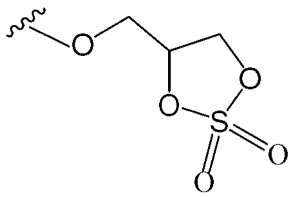 or 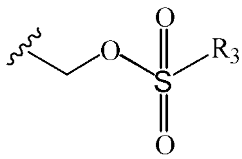 ,

and $R_3$ comprises $C_1$-$C_6$ alkyl.

**14.** The electrolyte solution according to any one of claims 1-13, wherein the first additive comprises at least one of the following structural formulas:

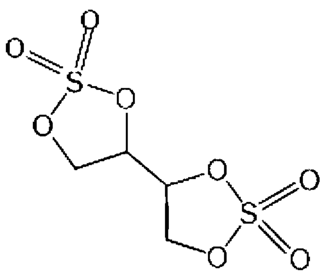

Formula 1-1 ,

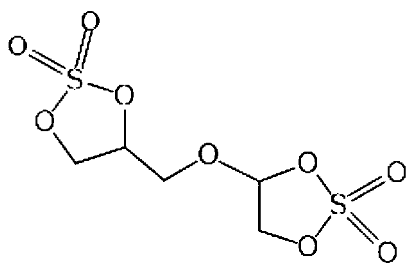

Formula 1-2 ,

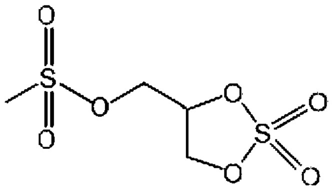
Formula 1-3 , 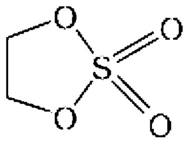
Formula 1-4 , 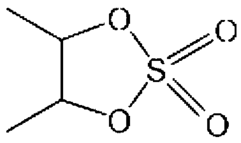
Formula 1-5 ,

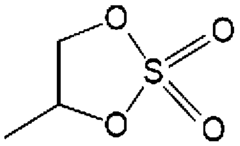
Formula 1-6 , 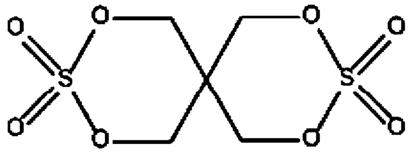
Formula 1-7 ,

and

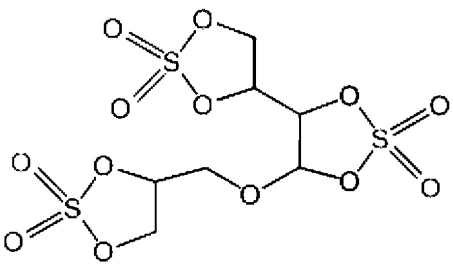
Formula 1-8 .

**15.** The electrolyte solution according to any one of claims 1-14, wherein the second additive comprises at least one of the following:

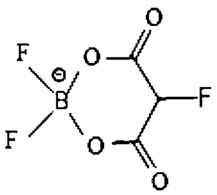
Formula 2-1 , 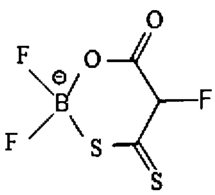
Formula 2-2 , 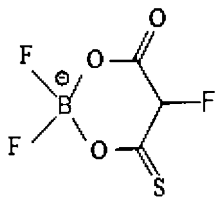
Formula 2-3 , and 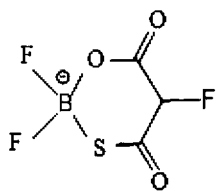
Formula 2-4 .

**16.** A battery, comprising the electrolyte solution according to any one of claims 1-15.

**17.** The battery according to claim 16, wherein the battery comprises a positive electrode plate, and the positive electrode active material in the positive electrode plate comprises:

$$Li_xNi_aCo_bMn_cM_dO_{2-e},$$

wherein M comprises at least one of aluminum, zirconium, boron, magnesium, zinc, calcium and titanium, $0.65 \leq a \leq 0.98$, $0 \leq b \leq 0.3$, $0.02 \leq c \leq 0.3$, $0 \leq d \leq 0.3$, $a+b+c+d=1$, $0.1 \leq x \leq 1.3$, and $0 \leq e \leq 1.9$.

**18.** The battery according to claim 17, wherein x, a, b, c, d and e satisfy at least one of the following:

$$0.7 \leq a \leq 0.92;$$

$$0 \le b \le 0.2;$$

$$0.02 \le c \le 0.2;$$

$$0.0001 \le d \le 0.1;$$

$$0.2 \le x \le 1.2;$$

and

$$0.1 \le e \le 1.$$

**19.** The battery according to claim 17 or 18, wherein compaction density of the positive electrode plate is 3.1 g/cm$^3$-3.7 g/cm$^3$.

**20.** The battery according to any one of claims 17-19, wherein compaction density of the positive electrode plate is 3.2 g/cm$^3$-3.6 g/cm$^3$.

**21.** The battery according to any one of claims 16-20, wherein the battery comprises a negative electrode plate, and compaction density of the negative electrode plate is 1.3 g/cm$^3$-1.7 g/cm$^3$.

**22.** The battery according to claim 21, wherein the compaction density of the negative electrode plate is 1.4 g/cm$^3$-1.6 g/cm$^3$.

**23.** An electrical device, comprising the battery according to any one of claims 16-22.

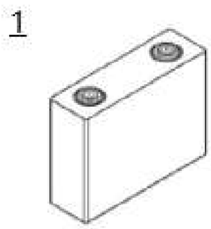


FIG. 1

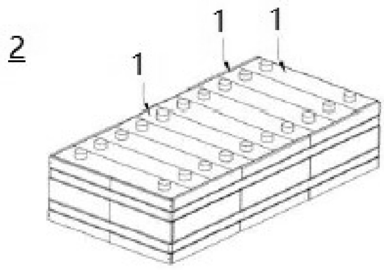


FIG. 2

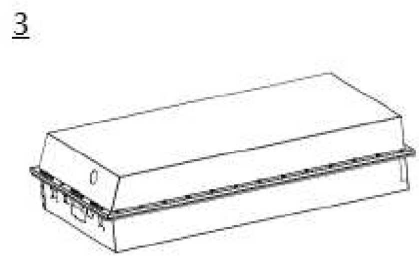


FIG. 3

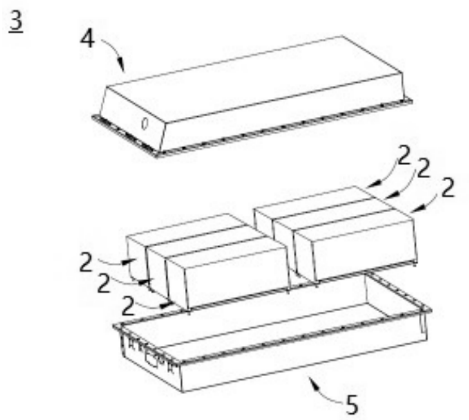


FIG. 4

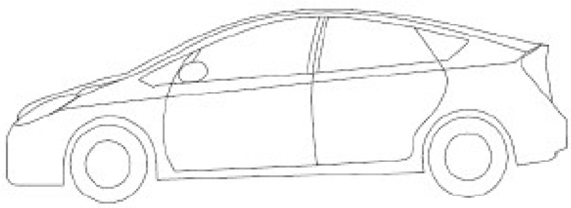

FIG. 5

**INTERNATIONAL SEARCH REPORT**

International application No.
**PCT/CN2023/115463**

**A. CLASSIFICATION OF SUBJECT MATTER**

H01M10/0567(2010.01)i；H01M10/0525(2010.01)i

According to International Patent Classification (IPC) or to both national classification and IPC

**B. FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 电池, 电解液, 添加剂, 成膜, 正极, 负极, 界面膜, 硫酸酯, 丙二酸, 硼酸锂, 氟磺酸, 二氟磷酸, 二氟草酸, batter+, electrolyte, additive, film, positive, electrode, negative, sulfate ester, malonic acid, lithium borate, SEI

**C. DOCUMENTS CONSIDERED TO BE RELEVANT**

| Category* | Citation of document, with indication, where appropriate, of the relevant passages | Relevant to claim No. |
|---|---|---|
| PX | CN 116404257 A (CONTEMPORARY AMPEREX TECHNOLOGY CO., LTD.) 07 July 2023 (2023-07-07)<br>description, paragraphs [0002]-[0123] | 1-23 |
| X | CN 116154282 A (ZHEJIANG RESEARCH INSTITUTE OF CHEMICAL INDUSTRY CO., LTD. et al.) 23 May 2023 (2023-05-23)<br>description, paragraphs [0002]-[0085] | 1-23 |
| X | CN 110506358 A (MITSUI CHEMICALS, INC.) 26 November 2019 (2019-11-26)<br>description, paragraphs [0012]-[0339], and figures 1-3 | 1-23 |
| A | CN 105745780 A (BASF SE) 06 July 2016 (2016-07-06)<br>entire document | 1-23 |
| A | CN 109818064 A (SHANSHAN ADVANCED MATERIALS (QUZHOU) CO., LTD.) 28 May 2019 (2019-05-28)<br>entire document | 1-23 |

☐ Further documents are listed in the continuation of Box C.　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 December 2023** | **11 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/115463**

| Patent document cited in search report | Publication date (day/month/year) | Patent family member(s) | Publication date (day/month/year) |
|---|---|---|---|
| CN 116404257 A | 07 July 2023 | CN 116404257 B | 20 October 2023 |
| CN 116154282 A | 23 May 2023 | WO 2023088234 A1 | 25 May 2023 |
| CN 110506358 A | 26 November 2019 | EP 3605707 A1 | 05 February 2020 |
| | | EP 3605707 A4 | 16 December 2020 |
| | | US 2021043971 A1 | 11 February 2021 |
| | | JPWO 2018181369 A1 | 06 February 2020 |
| | | JP 6913159 B2 | 04 August 2021 |
| | | WO 2018181369 A1 | 04 October 2018 |
| CN 105745780 A | 06 July 2016 | KR 20160086838 A | 20 July 2016 |
| | | KR 102298774 B1 | 07 September 2021 |
| | | EP 3072178 A1 | 28 September 2016 |
| | | EP 3072178 A4 | 19 July 2017 |
| | | EP 3072178 B1 | 10 April 2019 |
| | | WO 2015073419 A1 | 21 May 2015 |
| | | US 2015140446 A1 | 21 May 2015 |
| | | US 9698447 B2 | 04 July 2017 |
| | | JP 2017504145 W | 02 February 2017 |
| CN 109818064 A | 28 May 2019 | CN 109818064 B | 11 May 2021 |

Form PCT/ISA/210 (patent family annex) (July 2022)